# EUROPÄISCHE PATENTANMELDUNG

(11) **EP 2 924 220 A1**
(43) Veröffentlichungstag der Anmeldung: **30.09.2015**
(21) Anmeldenummer: 15159357.1
(22) Anmeldetag: 17.03.2015
(51) Int. Cl.: E06B 1/62, E04B 1/68, B32B 5/00

(54) **Dichtungselement**

(30) Priorität: 25.03.2014 DE 102014104098
(71) Anmelder: Odenwald Chemie GmbH, 69250 Schönau (DE)
(72) Erfinder: Drumm, Andreas, 69256 Mauer (DE); Schwammberger, Torsten, 74862 Binau (DE)
(74) Vertreter: Müller Schupfner & Partner Patent- und Rechtsanwaltspartnerschaft mbB

(57) **Zusammenfassung**

Die vorliegende Erfindung betrifft ein Dichtungselement mit einem ersten Schaumabschnitt und einem zweiten Schaumabschnitt, wobei der erste Schaumabschnitt und der zweite Schaumabschnitt aneinander gefügt sind, wobei der erste Schaumabschnitt eine Fügefläche zur Festlegung an dem zweiten Schaumabschnitt aufweist, welche sich in einem ersten Zustand des Dichtungselements im Wesentlichen in einer Neutralebene erstreckt, wobei das Material des zweiten Schaumabschnitts eine höhere Widerstandsfähigkeit gegen Verformung aufweist als das Material des ersten Schaumabschnitts.

## Beschreibung

Die vorliegende Erfindung betrifft ein Dichtungselement für den Einsatz am Bau.

Dichtungselemente sind aus dem Stand der Technik bereits bekannt. So werden beispielsweise schaumstoffartig ausgebildete Dichtungselemente im Fensterbau eingesetzt, wobei diese zwischen einem Fensterrahmen und dem Mauerwerk im zusammengepressten Zustand eingefügt werden, um sich anschließend ausdehnen und einen zwischen dem Fensterrahmen und dem Mauerwerk bestehenden Spalt abzudichten. Die dabei verwendeten Materialien sind jedoch mitunter sehr kostenintensiv sowohl bezüglich der Materialpreise als auch in ihrer Herstellung. Weiterhin haben sich die bekannten Dichtungselemente als nachteilig erwiesen, wenn die Außengeometrie eines Fensterrahmens beispielsweise verschiedene Rücksprünge oder unebene Geometrien aufweist.

Aufgabe der vorliegenden Erfindung ist es, Dichtungselemente dahingehend zu verbessern, dass sie kostengünstiger herzustellen und zu beschaffen sind und dass sie eine verbesserte Abdichtung des Spaltes zwischen Mauerwerk und Fensterrahmen auch bei ungleichmäßigen Außengeometrien der Fensterrahmen erlauben.

Die vorliegende Aufgabe wird mit einem Dichtungselement gemäß Anspruch 1 gelöst. Weitere Vorteile und Merkmale der Erfindung ergeben sich aus den abhängigen Ansprüchen.

Erfindungsgemäß ist ein Dichtungselement vorgesehen, welches einen ersten Schaumabschnitt und einen zweiten Schaumabschnitt aufweist, wobei der erste Schaumabschnitt und der zweite Schaumabschnitt aneinander gefügt sind, wobei der erste Schaumabschnitt eine Fügefläche zur Festlegung an dem zweiten Schaumabschnitt aufweist, welche sich in einem ersten Zustand des Dichtungselements im Wesentlichen in einer Neutralebenen erstreckt, wobei der zweite Schaumabschnitt eine höhere Widerstandsfähigkeit gegen Verformung aufweist als der erste Schaumabschnitt. Das Dichtungselement aus zwei Schaumabschnitten, von denen der zweite Schaumabschnitt eine höhere Widerstandsfähigkeit gegen Verformung, das heißt mit anderen Worten beispielsweise einen höheren E-Modul, als der erste Schaumabschnitt aufweist und auf diese Weise in de Lage ist, den ersten Schaumabschnitt und somit das gesamte Dichtungselement in einer Richtung zu stabilisieren. Dem Begriff Schaumabschnitt wohnt bereits die bevorzugte Ausbildung des Dichtungselements aus einem geschäumten Material inne. Dabei kann der zweite Schaumabschnitt mit Vorteil aus einem Schaummaterial mit vergleichsweise kleiner Porengröße gegenüber dem ersten Schaumabschnitt ausgebildet sein, um seine Festigkeit zu erhöhen. Vorzugsweise ist das Dichtungselement als Strang mit einem rechteckigen oder im Wesentlichen rechteckigen Querschnitt ausgebildet, wobei die Rechteckform insbesondere bevorzugt im ersten Zustand des Dichtungselements vorliegt. Der erste Zustand ist mit anderen Worten der Zustand, in dem keine äußeren Kräfte auf das Dichtungselement einwirken und dieses verformen. Der erste Schaumabschnitt weist eine Fügefläche auf, welche sich im ersten Zustand im Wesentlichen in einer Neutralebene erstreckt. Im Wesentlichen bedeutet in diesem Zusammenhang, dass kleinere Materialunebenheiten und Fertigungstoleranzen bei dieser Erstreckung der Fügefläche in der Ebene nicht berücksichtigt werden sollen. Für den Fall, dass die Fügefläche starke Amplituden relativ zu einer Ebene aufweist, mit anderen Worten also wellig ausgebildet ist, soll die Neutralebene als die mittlere Ebene definiert sein, in welcher sich die Fügefläche größtenteils erstreckt. Besonders bevorzugt ist das Dichtungselement derart ausgelegt, dass es in einen Spalt zwischen einem Fenster und dem Mauerwerk eines das Fenster umgebenden Gebäudes eingefügt werden kann. Dabei wird besonders bevorzugt der erste Schaumabschnitt mit seiner der Fügefläche gegenüberliegenden Seite in Richtung des Mauerwerks ausgerichtet und der zweite Schaumabschnitt mit seiner dem ersten Schaumabschnitt gegenüberliegenden Seite dem Fensterrahmen zugewandt ausgerichtet. Auf diese Weise kann der zweite Schaumabschnitt sich zumindest bereichsweise an dem Fensterrahmen abstützen und somit den ersten Schaumabschnitt vom Einsinken in Aussparungen am Fensterrahmen abhalten, beziehungsweise vor starker Verformung durch eventuell am Fensterrahmen vorhandene Rücksprünge oder Unebenheiten, schützen. Besonders bevorzugt ist dabei das Dichtungselement derart ausgelegt, dass es in einem vorgespannten Zustand zwischen dem Mauerwerk und dem Rahmen des Fensters anordenbar ist.

Mit Vorteil ist das Dichtungselement unter Einwirken einer, vorzugsweise als Flächenlast ausgebildeten Kraft an der Oberseite des ersten Schaumabschnitts und zweier entgegenwirkender und voneinander beabstandeter Kräfte an dem zweiten Schaumabschnitt das Dichtungselement in einen zweiten Zustand versetzbar, wobei die Fügefläche im zweiten Zustand einen gekrümmten Abschnitt mit einer Breite aufweist und wobei im zweiten Zustand der erste Schaumabschnitt derart verformt ist, dass die Fügefläche einen Abstand zur Neutralebene aufweist, der kleiner ist als die Breite des gekrümmten Abschnitts der Fügefläche. Mit anderen Worten greift also an der Oberseite und an der Unterseite des Dichtungselements jeweils zumindest eine Kraft an, wobei die Kraft an der Oberseite des Dichtungselements auf den ersten Schaumabschnitt einwirkt und wobei die Kraft an der Unterseite des Dichtungselements auf den zweiten Schaumabschnitt übertragen wird. Durch diese beiden Kräfte wird das Dichtungselement derart verformt, dass die Fügefläche in zumindest einem Punkt einen Abstand zur Neutralebene aufweist. Die Neutralebene verläuft im zweiten Zustand des Dichtungselements dabei bevorzugt durch einen Bereich der Fügefläche, in welchem sich die Kraft an der Oberseite und die Kraft an der Unterseite genau gegenüberliegen, mit anderen Worten also in entgegengesetzter Richtung zueinander kollinear verlaufen. Insbesondere in dem Fall, dass die Kraft an der Oberseite durch ein Mauerwerk ausgeübt wird und somit eine auf das Dichtungselement einwirkende Flächenlast ist und die Kraft an der Unterseite beziehungsweise am zweiten Schaumabschnitt durch Auflagepunkte des Dichtungselements an einem Fensterrahmen entsteht, verläuft die Neutralebene also durch einen Bereich der Fügefläche, welcher vorzugsweise auf Höhe der Auflagepunkte des Fensterrahmens liegt. Das Dichtungselement stützt sich mit anderen Worten bevorzugt an einem Mauerwerk ab. Die Verschiebung der Fügefläche aus der Neutralebene heraus resultiert dabei aufgrund der elastischen Rückstellkraft des ersten Schaumabschnitts, welcher den zweiten Schaumabschnitt dort, wo dieser nicht durch den Fensterrahmen abgestützt ist, in Richtung vorzugsweise einer Vertiefung am Fensterrahmen schiebt. Mit anderen Worten definiert der zweite Zustand somit den eingebauten Zustand des Dichtungselements, wobei in diesem Zustand der zweite Schaumabschnitt seine abstützende Wirkung entfaltet. Es hat sich gezeigt, dass aus dem Stand der Technik bekannte Fensterprofile oft jeweils zwei nach außen ragende profilartige Stege aufweisen, an welchen das Dichtungselement zur Auflage gelangt. Es zeigt sich bei dieser und auch bei den weiteren folgenden Ausführungsformen insbesondere die vorteilhafte Eigenschaft des zweiten Schaumabschnitts, dass dieser auch dann, wenn die Geometrie des Fensterrahmens sehr scharfkantig sein sollte, wirksam verhindern kann, dass insbesondere in dem Eckenbereich des Einwirkens der Auflagekräfte des Fensterrahmens ein Anreißen des Dichtungselements verhindert werden kann. Hierfür weist das Material des zweiten Schaumabschnitts bevorzugt eine höhere Zugfestigkeit als das Material des ersten Schaumabschnitts auf und ist somit widerstandsfähiger gegenüber lokalen Spannungsspitzen, wie sie durch Kerbwirkung verursacht werden. Die Krümmung des gekrümmten Abschnitts der Fügefläche ist dabei insbesondere in einer Schnittansicht beziehungsweise entlang einer Schnittebene durch das Dichtungselement, welche senkrecht zur Neutralebene verläuft, bestimmbar.

Vorzugsweise steht der maximale Abstand der Fügefläche von der Neutralebene zur Breite des gekrümmten Abschnitts in einem Verhältnis von 0,02 bis 0,2, vorzugsweise 0,04 bis 0,15 und besonders bevorzugt bei ca. 0,08 bis 0,12. Das hier beschriebene Verhältnis ist mit anderen Worten ein Ausdruck für die Leistungsfähigkeit des zweiten Schaumabschnitts, das Dichtungselement insgesamt bei Aufpressung auf einen Fensterrahmen gegen zu starke Verformung zu sichern. Dabei ist es verständlich, dass mit steigender Breite des gekrümmten Abschnitts, welche daraus resultiert, dass zwischen den beiden Auflagepunkten des Dichtungselements ein größerer Abstand besteht, auch die maximale Amplitude der Krümmung relativ zur Neutralebene ansteigt. Der maximale Abstand der Fügefläche von der Neutralebene ist somit mit anderen Worten der Punkt, an dem der zum zweiten Schaumabschnitt hingewandte Teil des ersten Schaumabschnitts am weitesten von der Neutralebene beabstandet ist oder mit anderen Worten am weitesten in eine an einem Fensterrahmen vorgesehene Aussparung hineinragt. Es ist dabei vor allem deswegen bevorzugt eine zu starke Verformung des Dichtungselements und insbesondere des ersten Schaumabschnitts zu verhindern, da, je weiter der erste Schaumabschnitt in die Aussparung eines Fensterrahmens hineinragt, desto geringer die Anpresskraft der Oberseite des ersten Schaumabschnitts gegenüber dem Mauerwerk wird. Es ist jedoch bevorzugt, dass das Dichtungselement auch gegenüber dem Mauerwerk mit einer möglichst konstanten, oder so gering wie möglich veränderten Anpresskraft anliegt. Auf diese Weise ist gewährleistet, dass insbesondere angesichts der in den meisten Fällen an einem Mauerwerk vorgesehenen Oberflächenunebenheiten trotzdem eine besonders gute Abdichtung durch das Dichtungselement zwischen Mauerwerk und Fensterrahmen erreicht werden kann. Indem das Dichtungselement nicht zu stark in eine Aussparung am Fensterrahmen hineinragt, verbleibt in dieser Aussparung ein größerer Anteil an Luft, welche ein guter Isolator gegen Wärmestrom ist. Somit leistet der zweite Schaumabschnitt einen effektiven Beitrag zur Erhöhung der Abdichtung des Spaltes zwischen Fensterrahmen und Mauerwerk und zur Senkung des Wärmeübertragungskoeffizienten dieses Bereiches des Bauwerks.

Insbesondere bevorzugt weist das Dichtungselement im ersten Zustand eine freie Gesamtdicke auf, wobei der erste Schaumabschnitt im ersten Zustand eine freie erste Dicke aufweist und wobei das Verhältnis der freien ersten Dicke zur freien Gesamtdicke bei 0,6 bis 0,95, vorzugsweise bei 0,7 bis 0,9 und besonders bevorzugt bei ca. 0,85 bis 0,92 liegt. Das Verhältnis der freien Gesamtdicke, der Dicke des gesamten Dichtungselements quer zur Neutralebene also, und der freien ersten Dicke, der Dicke des ersten Schaumabschnitts quer zur Neutralebene also, ist mit anderen Worten ein Ausdruck dafür, dass bei einer bestimmten Gesamtdicke des Dichtungselements der erste Schaumabschnitt vorzugsweise nur einen bestimmten Anteil an dieser Gesamtdicke hält. Dies liegt zum einen darin begründet, dass durch eine Vergrößerung des Anteils der Dicke des zweiten Schaumabschnitts die Widerstandsfähigkeit des gesamten Dichtungselements gegenüber Verformung erhöht wird. Auf der anderen Seite ist es aber bevorzugt, den Anteil des ersten Schaumabschnitts an der freien Gesamtdicke nicht zu stark zu reduzieren, da der erste Schaumabschnitt vorzugsweise aus einem offenzelligen Schaummaterial ausgebildet ist, welches in besonders bevorzugter Ausführung getränkt ist und daher besonders vorteilhafte Eigenschaften für die Gesamtdichtungswirkung des Dichtungselements beisteuert. Die vorliegenden bevorzugten Verhältnisbereiche der freien ersten Dicke zur freien Gesamtdicke sind daher Ausdruck dieses Kompromisses aus einerseits Ausnutzung der vorteilhaften Dichtungseigenschaften des ersten Schaumabschnitts und andererseits der gesteigerten Stabilität durch eine bestimmte Mindestdicke des zweiten Schaumabschnitts.

Weiterhin bevorzugt steht die komprimierte Gesamtdicke zur freien Gesamtdicke des Dichtungselements in einem Verhältnis von 0,25 bis 0,6, besonders bevorzugt von ca. 0,3 bis 0,33. Dieses bevorzugte Verhältnis ist ein Ausdruck für die Fähigkeit des Dichtungselements, einen Spalt zwischen einem Mauerwerk und einem Fensterrahmen gleichmäßig auszufüllen. Dabei wird beispielsweise ein Dichtungselement mit einer freien Gesamtdicke von 30mm im ersten Zustand auf eine komprimierte Gesamtdicke von 10mm im zweiten Zustand zusammengepresst und füllt auf diese Weise den Spalt besonders gut aus.

Mit Vorteil weist der erste Schaumabschnitt im zweiten Zustand eine komprimierte erste Dicke auf, wobei der maximale Abstand der Fügefläche von der Neutralebene in einem Verhältnis von 0,03 bis 0,5, vorzugsweise von 0,03 bis 0,3 und besonders bevorzugt von ca. 0,06 bis 0,08 zur Differenz der freien ersten Dicke und der komprimierten ersten Dicke des ersten Schaumabschnitts steht. Das vorliegend beschriebene Verhältnis ist somit ein Ausdruck dafür, wie stark die erste Fügefläche und somit der erste Schaumabschnitt bei einer bestimmten Komprimierung des ersten Schaumabschnitts verformt wird. Eine Komprimierung des ersten Schaumabschnitts, welche zu einer reduzierten, nämlich der komprimierten ersten Dicke des ersten Schaumabschnitts führt, resultiert verständlicherweise aus einer Kompression des gesamten Dichtungselements. Der bevorzugte Verhältnisbereich von 0,03 bis 0,5 hat sich dabei als günstig erwiesen um bei einer bestimmten Kompression des Dichtungselements eine gute Dichtwirkung durch geringe Verformung der Fügefläche und gleichzeitig ausreichende Elastizität und niedrige Wärmeübergangskoeffizienten des ersten und des zweiten Schaumabschnitts zu ermöglichen. Mit Vorteil wird ein Verhältnis von 0,06 bis 0,08 bei einem Dichtungselement erreicht, welches eine Gesamtdicke von ca. 45mm aufweist und, wobei die Breite des gekrümmten Abschnitts bei ca. 30mm bis 40mm liegt. Es ist in diesem Zusammenhang aber ebenfalls bevorzugt, dass bei Zusammenpressen des Dichtungselements mit einer Kraft, welche im Wesentlichen senkrecht zur Neutralebene wirkt, der erste Schaumabschnitt eine deutlich größere Verformung erfährt, als der zweite Schaumabschnitt. Ursache hierfür ist die bevorzugt vorgesehen höhere Widerstandsfähigkeit des zweiten Schaumabschnitts gegenüber Verformung. Vorzugsweise wird die freie erste Dicke und die komprimierte erste Dicke jeweils am Randbereich des Dichtungselements gemessen oder alternativ in den Bereichen, in denen auch die Lage der Neutralebene durch die einander gegenüberstehenden, auf das Dichtungselement einwirkenden Kräfte liegen.

In einer besonders bevorzugten Ausführungsform ist der erste Schaumabschnitt aus offenzelligem Polymerschaum hergestellt, wobei der zweite Schaumabschnitt vorzugsweise aus einem geschäumten Polyolefin hergestellt ist. Polyolefin als Herstellungsmaterial für den zweiten Schaumabschnitt eignet sich insbesondere daher, dass es günstiger herzustellen ist und eine höhere Festigkeit als offenzelliger Polymerschaum aufweist. Der zweite Schaumabschnitt ist dabei vorzugsweise aus einem geschlossenzelligen Material, vorzugsweise geschlossenzelligem Polyolefinschaum hergestellt. Die offenzellige Ausführung des Polymerschaums des ersten Schaumabschnitts erlaubt es, diesen zu imprägnieren und somit weitere vorteilhafte abdichtende Eigenschaften des ersten Schaumabschnitts zu generieren. Als bevorzugte Polyolefinmaterialien kommt für den zweiten Schaumabschnitt insbesondere bevorzugt Polypropylen zum Einsatz, da es eine hohe Festigkeit aufweist. Alternativ zu Polypropylen kann auch Polyethylen eingesetzt werden, da es besonders günstig und leicht herzustellen ist. Für ebenfalls gesteigerte Festigkeitswerte kann auch ein Zellkautschuk oder ein PUR-Schaum zum Einsatz gelangen.

In einer weiterhin bevorzugten Ausführungsform ist der erste Schaumabschnitt mit dem zweiten Schaumabschnitt eines Klebers auf Acrylatbasis oder kautschukbasis verklebt. Ein Kleber auf Acrylatbasis zeichnet sich insbesondere durch eine hohe Lebensdauer und eine besonders feste stoffschlüssige Verbindung der beiden Schaumabschnitte aus. Weiterhin bevorzugt ist dieser Kleber geeignet, die bevorzugten Materialien des ersten und des zweiten Schaumabschnitts in gleicher Weise zu binden.

Weiterhin bevorzugt ist die Druckspannung bei einer bestimmten Verformung des zweiten Schaumabschnitts ein 1,1- bis 3-faches, vorzugsweise ein 1,1- bis 2-faches und besonders bevorzugt ein 1- bis 1,5-faches der entsprechenden Druckspannung des ersten Schaumabschnitts. Die Ermittlung der Druckspannung ist ein übliches Verfahren, um die Widerstandsfähigkeit eines Schaum- oder eines Polymermaterials gegenüber von außen einwirkenden Druckkräften zu ermitteln. Dabei ist es bevorzugt, dass das Material des zweiten Schaumabschnitts insbesondere aufgrund einer höheren Dichte, der Verwendung festeren Materials und/oder durch eine geschlossenzellige Ausbildung des Schaumes einer bestimmten Verformung eine höhere Druckspannung entgegensetzt als dies beim Material des ersten Schaumabschnitts der Fall ist. Bei einer besonders bevorzugten Ausführungsform weist das Material des zweiten Schaumabschnitts eine Druckspannung von mehr als 15 kPa bei einer 10 %igen Verformung des Materials, eine Druckspannung von > 25 kPa bei einer 25 %igen Verformung und eine Druckspannung von > 80 kPa bei einer 50 %igen Verformung des Materials auf. Es ist verständlich, dass sich die Druckspannung, die das Material des zweiten Schaumabschnitts einer Verformung entgegensetzt, jeweils in einem Verhältnis zur Druckspannung, die das Material des ersten Schaumabschnitts einer bestimmten Verformung entgegensetzt, stehen muss. So ist bevorzugt, wenn das Material des ersten Schaumabschnitts eine relativ hohe Widerstandsfähigkeit gegen Verformung aufweist, auch das Material des zweiten Schaumabschnitts mit einer entsprechend gesteigerten, beziehungsweise im Vergleich zum Material des ersten Schaumabschnitts größeren, Widerstandsfähigkeit gegenüber Verformung auszulegen, damit der zweite Schaumabschnitt seine abstützende Wirkung gegenüber dem ersten Schaumabschnitt und somit dem gesamten Dichtungselement entfalten kann.

In einer weiterhin bevorzugten Ausführungsform ist das Material des ersten Schaumabschnitts und/oder des zweiten Schaumabschnitts beständig gegen Temperaturen von bis zu 115° C. Temperaturbeständigkeit bedeutet in diesem Zusammenhang, dass das Material des Dichtungselements, vorzugsweise des ersten und/oder des zweiten Schaumabschnitts, bei hohen Temperaturen nur vernachlässigbare Materialänderungen erfährt. Eine hohe Temperaturbeständigkeit kann beispielsweise durch Einsatz entsprechender Imprägnierungen oder durch das Hinzufügen von Zusatzstoffen in die Herstellungsmaterialien des ersten sowie des zweiten Schaumabschnitts erreicht werden. Bei einer Temperaturbeständigkeit von bis zu 115° C und in bevorzugten Spezialanwendungsfällen sogar 120° C ist eine ausreichende Sicherheit gegen schädliche Veränderungen des Materials wie beispielsweise Schrumpfen oder Entstehung von Porositäten für die normalen Einsatzbereiche des Dichtungselements im Bauwesen gegeben. Insbesondere bevorzugt ist es, dass auch bei höheren Temperaturen, die am Dichtungselement anliegen, die abstützende Wirkung des zweiten Schaumabschnitts weiterhin nahezu unverändert gegeben ist. Hierdurch eignet sich das Dichtungselement auch zum Einsatz in südlicheren Gebieten, in welchen die Tagesdurchschnittstemperatur wesentlich höher ist als beispielsweise in Mitteleuropa.

Weiterhin bevorzugt sind der erste und/oder der zweite Schaumabschnitt aus einem Material hergestellt, das schwer entflammbar nach DIN 75200 ist. Weiterhin bevorzugt sind der erste und/oder der zweite Schaumabschnitt normalentflammbar nach DIN 4102 - B2 und EN 13501-1 Klasse E. Die geringe Entflammbarkeit des Materials des ersten und/oder des zweiten Schaumabschnitts führt dazu, dass das Dichtungselement vorzugsweise auch in kritischen Teilen eines Hauses einsetzbar ist. Zur Steigerung der Widerstandsfähigkeit gegen Entflammung kann insbesondere bevorzugt eine Imprägnierung auf das Dichtungselement aufgebracht werden.

Vorzugsweise verringert der zweite Schaumabschnitt ein Schrumpfen des Dichtungselements, wenn dieses auf Zug belastet wird. Die höhere Widerstandsfähigkeit gegen Verformung des Materials des zweiten Schaumabschnitts sorgt dafür, dass dieses und somit das gesamte Dichtungselements bei einer Zugbeanspruchung weniger stark gedehnt wird. Daher reduziert sich auch die Verringerung der Breite des Dichtungselements beim Einbau des Dichtungselements durch einen Monteur, welcher das Dichtungselement beispielsweise über die Ecken eines Fensterrahmens hinweg spannt. Es wird durch den Einsatz des zweiten Schaumabschnitts an einem Dichtungselement auf diese Weise bevorzugt die Formstabilität des Dichtungselements beim Einbau erhöht, wobei die Anpassung eines bestimmten Dichtungselements für einen bestimmten Fensterrahmen auch während des Einbaus erhalten bleibt.

Weitere Vorteile und Merkmale der vorliegenden Erfindung ergeben sich aus der nachfolgenden Beschreibung mit Bezug auf die beigefügten Figuren. Es versteht sich dabei, dass einzelne der einzelnen Ausführungsformen im Rahmen der vorliegenden Erfindung miteinander kombiniert werden können.

Es zeigen:
- Fig. 1: eine Schnittansicht einer bevorzugten Ausführungsform des erfindungsgemäßen Dichtungselements im ersten Zustand,
- Fig. 2: eine bevorzugte Ausführungsform des erfindungsgemäßen Dichtungselements im zweiten Zustand,
- Fig. 3: eine weitere Ansicht einer bevorzugten Ausführungsform des erfindungsgemäßen Dichtungselements im zweiten Zustand, und
- Fig. 4: eine Schnittansicht der Einbausituation einer bevorzugten Ausführungsform des erfindungsgemäßen Dichtungselements.

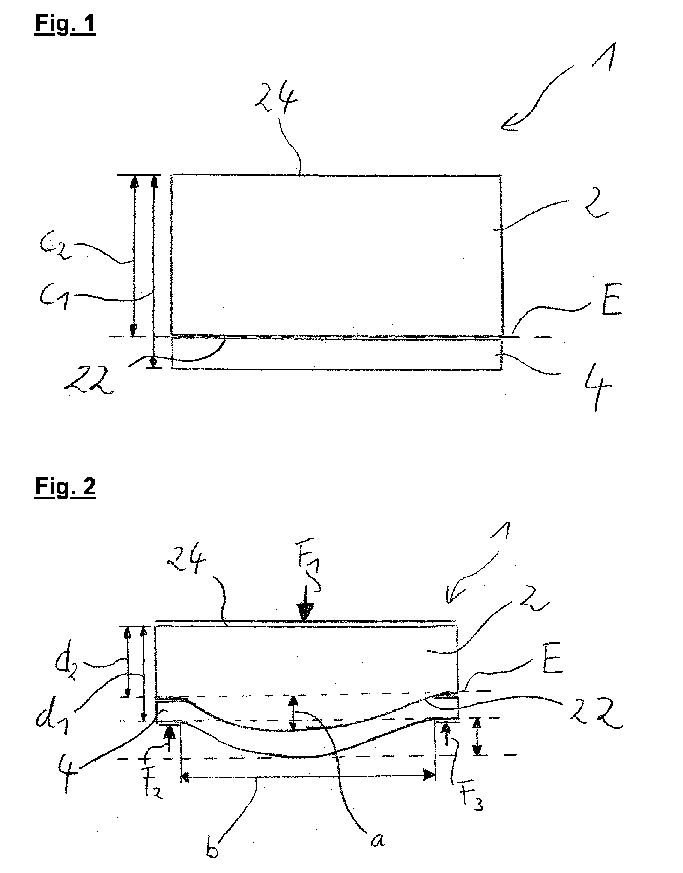

Das in **Fig. 1** dargestellte Dichtungselement 1 weist einen ersten Schaumabschnitt 2 und einen zweiten Schaumabschnitt 4 auf, wobei die beiden Schaumabschnitte 2 und 4 vorzugsweise an einer ersten Fügefläche 22 des ersten Schaumabschnitts 2 zusammengefügt sind. Zur Verbindung des ersten Schaumabschnitts 2 und des zweiten Schaumabschnitts 4 ist vorzugsweise ein Acrylatkleber vorgesehen. Weiterhin geht aus Fig. 1 deutlich hervor, dass das Dichtungselement 1 eine vorzugsweise rechteckige Form aufweist. Der in Fig. 1 gezeigte erste Zustand des Dichtungselements 1 ist dabei dadurch gekennzeichnet, dass keine äußeren Kräfte auf das Dichtungselement 1 einwirken und dieses somit spannungsfrei und ohne Verformung vorliegt. Im ersten Zustand erstreckt sich die Fügefläche 22 vorzugsweise entlang einer Neutralebene E. Für den Fall, dass die Fügefläche 22 eine wellige oder ähnlich ausgebildete Struktur hat, ist vorgesehen, dass die Neutralebene E die mittlere Erstreckungsrichtung beziehungsweise Erstreckungsfläche der Fügefläche 22 ist. Für die in Fig. 1 dargestellte Schnittansicht würde dies bedeuten, dass, wenn die Schnittansicht der Fügefläche 22 beispielsweise einen sinusförmigen Verlauf hätte, die Schnittansicht (Gerade) der Neutralebene E entsprechend mittig zwischen den positiven sowie negativen Amplitudenwerten der Schnittkurve der Fügefläche 22 liege würde. Im ersten Zustand weist das Dichtungselement 1 eine freie Gesamterstreckung c₁ auf, welche sich quer zur Neutralebene E erstreckt. Weiterhin weist der erste Schaumabschnitt im ersten Zustand des Dichtungselements 1 eine freie erste Erstreckung c₂ auf. Vorzugsweise ist dabei das Verhältnis der freien ersten Erstreckung c₂ zur freien Gesamterstreckung c₁ ungefähr 0,6 bis 0,95.

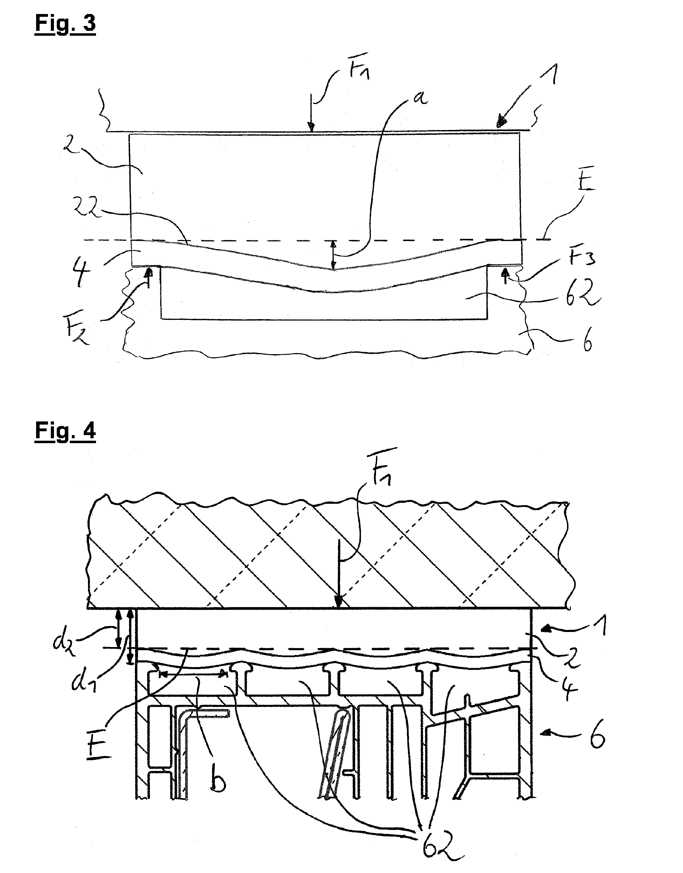

**Fig. 2** zeigt eine Schnittansicht einer bevorzugten Ausführungsform des erfindungsgemäßen Dichtungselements 1 im zweiten Zustand. Es wirken dabei in dieser Ausführungsform drei Kräfte auf das Dichtungselement 1 ein. Eine erste Kraft F₁, welche auf der Oberseite 24 des Dichtungselements 1 anliegt und vorzugsweise als Flächenlast ausgelegt ist, eine zweite Kraft F₂ und eine dritte Kraft F₃, wobei die zweite und die dritte Kraft F₂, F₃ der ersten Kraft F₁ vorzugsweise entgegenwirken. Weiterhin sind die zweite Kraft F₂ und die dritte Kraft F₃ voneinander beabstandet und wirken auf eine deutlich kleinere Fläche des Dichtungselements ein als die erste Kraft F₁. Es versteht sich, dass die Summe der zweiten Kraft F₂ und der dritten Kraft F₃ den gleichen Betrag aufweist wie die erste Kraft F₁. Die zweite Kraft F₂ und die dritte Kraft F₃ sind dabei vorzugsweise ebenfalls Flächenkräfte beziehungsweise Flächenlasten und wirken vorzugsweise auf den zweiten Schaumabschnitt 4 ein. Durch das Anliegen der drei Kräfte, F₁, F₂ und F₃ wird das Dichtungselement 1 in den zweiten Zustand versetzt, wobei der zweite Zustand durch eine Verformung des Dichtungselements 1 gekennzeichnet ist. Dabei wird zum einen der erste Schaumabschnitt 2 derart komprimiert, dass er eine komprimierte erste Erstreckung d₂ aufweist. Auch der zweite Schaumabschnitt 4 wird in diesem Zusammenhang komprimiert, wobei diese Kompression des zweiten Schaumabschnitts 4 bevorzugt deutlich geringer ist als die Kompression des ersten Schaumabschnitts 2. Insgesamt weist das Dichtungselement 1 im zweiten Zustand eine komprimierte Gesamterstreckung d₁ auf, wobei das Verhältnis der komprimierten ersten Erstreckung d₂ zur komprimierten Gesamterstreckung d₁ vorzugsweise kleiner ist als das Verhältnis der freien ersten Erstreckung c₂ zur freien Gesamterstreckung c₁. Weiterhin bildet sich durch das Anliegen der drei Kräfte F₁, F₂ und F₃ ein gekrümmter Abschnitt b der Fügefläche 22 aus. Gleichzeitig mit der Fügefläche 22 wird auch der zweite Schaumabschnitt sowie der untere Teil beziehungsweise die Fügefläche 22 und die umliegenden Bereiche des ersten Schaumabschnitts 2 entsprechend verformt, so dass sich eine Krümmung mit einer Breite b ausbildet, welche in Fig. 2 deutlich dargestellt ist. Im zweiten Zustand liegt die Neutralebene vorzugsweise in dem Bereich der Fügefläche 22, welcher nicht, wie im Bereich der Breite b gekrümmt ausgebildet ist. Mit anderen Worten liegt die Neutralebene E vorzugsweise in dem Bereich der Fügefläche 22, auf dessen Höhe die zweite Kraft F₂ und/oder die dritte Kraft F₃ einwirken. Für den Fall, dass die zweite Kraft F₂ und die dritte Kraft F₃ verschieden groß sind und somit die Fügefläche 22 eine verschiedene Höhe relativ zur Neutralebene E in den Bereichen des Eingriffs der beiden Kräfte F₂ und F₃ aufweist, wird die Neutralebene E vorzugsweise auf mittlerer Höhe zwischen den entsprechenden Bereichen der Fügefläche 22 angeordnet sein. Insbesondere bevorzugt ist es, dass die erste Kraft F₁ durch ein Mauerwerk auf das Dichtungselement 1 ausgeübt wird. Die zweite Kraft F₂ und die dritte Kraft F₃ resultieren dabei vorzugsweise aus der Auflage des Dichtungselements 1 auf einer entsprechenden Geometrie eines Fensterrahmens, wobei am Fensterrahmen vorgesehene Vorsprünge in der Weise, wie sie in Fig. 2 beziehungsweise in Fig. 3 dargestellt ist, auf das Dichtungselement 1 einwirken und dieses komprimieren. Vorzugsweise weist der gekrümmte Abschnitt der Fügefläche 22 einen maximalen Abstand a von der Neutralebene auf. Es versteht sich, dass in dem Bereich, in dem die Fügefläche 22 den Abstand a zur Neutralebene E aufweist, der erste Schaumabschnitt 2 weniger stark vorgespannt gegenüber dem von oben auf den ersten Schaumabschnitt 2 einwirkenden Mauerwerk ist als in den Bereichen am rechten und linken Rand des Dichtungselements 1, in denen die zweite Kraft F₂ und die dritte Kraft F₃ angreifen. Diese Verformung des ersten Schaumabschnitts 2 bedeutet somit, dass das Dichtungselement in seinem, in Fig. 2 dargestellten, mittleren Bereich der Oberseite 24 weniger stark an beispielsweise ein Mauerwerk gepresst ist, wobei dadurch die Dichtwirkung des Dichtungselements in diesem Bereich geringer ist als in den Randbereichen. Es ist daher bevorzugt, dass der Abstand a die von der vorliegenden Erfindung vorgeschlagenen Grenzwerte nicht überschreitet, das Dichtungselement 1 also nicht über einen bestimmten Wert hinaus in eine Aussparung 62 beziehungsweise Vertiefung an einem Fensterrahmen 6 hineinragt.

**Fig. 3** zeigt eine Ansicht einer bevorzugten Ausführungsform des erfindungsgemäßen Dichtungselements 1, bei der auf der Unterseite des Dichtungselements 1, an den zweiten Schaumabschnitt 4 angreifend, ein Rahmenprofil 6 vorgesehen ist, welches eine Vertiefung 62 aufweist. Die höhere Widerstandsfähigkeit des Materials des zweiten Schaumabschnitts 4 gegenüber Verformung sorgt dabei dafür, dass der zweite Schaumabschnitt 4 den ersten Schaumabschnitt 2 abstützt und somit verhindert, dass das Dichtungselement 1 zu weit in die Aussparung 62 am Fensterrahmen 6 hineinragt. Gleichzeitig wird dabei verhindert, dass der Abstand a der Fügefläche 22 von der Neutralebene E die bevorzugt vorgesehenen Grenzwerte überschreitet. Dabei bleibt der erste Schaumabschnitt 2 auch in seinem mittleren Bereich mit einer ausreichend hohen Anpresskraft an dem an der Oberseite des Dichtungselements 1 angeordneten Mauerwerk gehalten.

**Fig. 4** zeigt eine Schnittansicht einer bevorzugten Ausführungsform des erfindungsgemäßen Dichtungselements 1 im eingebauten Zustand, bzw. im zweiten Zustand. Dabei ist das Dichtungselement 1 zwischen einem Mauerwerk und einem Rahmenprofil 6 angeordnet. Das Rahmenprofil 6 weist dabei eine Vielzahl von Vertiefungen 62 auf. Die insgesamt fünf Stege des Rahmenprofils 6 üben je ein Kraft auf den zweiten Schaumabschnitt 4 des Dichtungselements 1 aus, wobei die Summe der vom Rahmenprofil 6 ausgeübten Kräfte gleich dem Betrag der Flächenlast F₁, welche vom Mauerwerk auf das Dichtungselement 1 übertragen wird, ist. Zwischen den Stegen des Rahmenprofils 6 ist das Dichtungsprofil 1 derart verformt, dass die Fügefläche 22 gekrümmte Abschnitte mit einer Breite b aufweist.

### Bezugszeichen:

- 1 -: Dichtungselement
- 2 -: erster Schaumabschnitt
- 22 -: Fügefläche
- 24 -: Oberseite
- 4 -: zweiter Schaumabschnitt
- 6 -: Rahmenprofil
- 62 -: Vertiefung
- E -: Neutralebene
- a -: Abstand Fügefläche zur Neutralebene
- b -: Breite des gekrümmten Abschnitts
- c₁ -: freie erste Dicke
- c₂ -: freie Gesamtdicke
- d₁ -: komprimierte erste Dicke
- d₂ -: komprimierte Gesamtdicke
- F₁, F₂, F₃ -: Kraft

## Patentansprüche

1. Dichtungselement (1), umfassend einen ersten Schaumabschnitt (2) und einen zweiten Schaumabschnitt (4),
wobei der erste Schaumabschnitt (2) und der zweite Schaumabschnitt (4) aneinander gefügt sind,
wobei der erste Schaumabschnitt (2) eine Fügefläche (22) zur Festlegung an dem zweiten Schaumabschnitt (4) aufweist, welche sich in einem ersten Zustand des Dichtungselements (1) im Wesentlichen in einer Neutralebene (E) erstreckt,
wobei das Material des zweiten Schaumabschnitts (4) eine höhere Widerstandsfähigkeit gegen Verformung aufweist als das Material des ersten Schaumabschnitts (2).

2. Dichtungselement nach Ansprüche 1,
wobei unter Einwirken einer Kraft (F₁) an einer Oberseite (24) des ersten Schaumabschnitts (2) und zweier entgegenwirkender und voneinander beabstandeter Kräfte (F₂, F₃) auf den zweiten Schaumabschnitt (4) das Dichtungselement (1) in einen zweiten Zustand versetzbar ist,
wobei im zweiten Zustand die Fügefläche (22) einen gekrümmten Abschnitt mit einer Breite (b) aufweist,
wobei im zweiten Zustand der erste Schaumabschnitt (2) derart verformt ist, dass die Fügefläche (22) einen Abstand (a) zur Neutralebene (E) aufweist der kleiner ist als die Breite (b) des gekrümmten Abschnitts.

3. Dichtungselement (1) nach Anspruch 2,
wobei der maximale Abstand (a) der Fügefläche (22) von der Neutralebene (E) zur Breite des ersten gekrümmten Abschnitts (b) in einem Verhältnis von 0,02 bis 0,2, vorzugsweise 0,04 bis 0,15 und besonders bevorzugt bei ca. 0,08 bis 0,12 steht.

4. Dichtungselement (1) nach einem der vorhergehenden Ansprüche,
wobei das Dichtungselement (1) im ersten Zustand eine freie Gesamtdicke (c₁) aufweist und wobei der erste Schaumabschnitt (2) im ersten Zustand eine freie erste Dicke (c₂), wobei das Verhältnis der freien ersten Dicke (c₂) zur freien Gesamtdicke (c₁) bei 0,6 bis 0,95, vorzugsweise bei 0,7 bis 0,9 und besonders bevorzugt bei ca. 0,85 bis 0,92 liegt.

5. Dichtungselement (1) nach Anspruch 4, wobei die komprimierte Gesamtdicke (d₁) zur freien Gesamtdicke (c₁) des Dichtungselements (1) in einem Verhältnis von 0,25 bis 0,6, besonders bevorzugt von ca. 0,3 bis 0,33, steht.

6. Dichtungselement (1) nach einem der Ansprüche 2 bis 5,
wobei der erste Schaumabschnitt (2) im zweiten Zustand eine komprimierte erste Dicke (d₂) aufweist, wobei der maximale Abstand (a) der Fügefläche (22) von der Neutralebene (E) in einem Verhältnis von 0,03 bis 0,5, vorzugsweise von 0,03 bis 0,3 und besonders bevorzugt von ca. 0,06 bis 0,08 zur Differenz der freien ersten Dicke (c₂) und der komprimierten ersten Dicke (d₂) des ersten Schaumabschnittes (2) steht.

7. Dichtungselement (1) nach einem der vorhergehenden Ansprüche, wobei der erste Schaumabschnitt (2) aus offenzelligem Polymerschaum hergestellt ist, und wobei der zweite Schaumabschnitt (4) aus einem geschäumten Polyolefin hergestellt ist.

8. Dichtungselement (1) nach einem der vorhergehenden Ansprüche,
wobei der erste Schaumabschnitt (2) und der zweite Schaumabschnitt (4) mit einem Kleber auf Acrylat- oder Kautschukbasis miteinander verklebt sind.

9. Dichtungselement (1) nach einem der vorhergehenden Ansprüche,
wobei die Druckspannung bei einer bestimmten Verformung des zweiten Schaumabschnitts (4) ein 1,1- bis 3-faches, vorzugsweise ein 1,1- bis 2-faches und besonders bevorzugt ein 1- bis 1,5-faches der entsprechenden Druckspannung des ersten Schaumabschnitts (2) ist.

10. Dichtungselement (1) nach einem der vorhergehenden Ansprüche,
wobei das Material des ersten Schaumabschnitts (2) und/oder des zweiten Schaumabschnitts (4) beständig gegen Temperaturen von bis zu 115°C ist, insbesondere indem das Material des ersten Schaumabschnitts (2) und/oder zweiten Schaumabschnitts (4) imprägniert oder mit Zusatzstoffen versehen ist.

11. Dichtungselement (1) nach einem der vorhergehenden Ansprüche,
wobei der erste Schaumabschnitt (2) und/oder der zweite Schaumabschnitt (4) aus einem Material hergestellt sind, das schwer entflammbar nach DIN 75200 ist, insbesondere indem das Material des ersten Schaumabschnitts (2) und/oder zweiten Schaumabschnitts (4) imprägniert ist.

12. Dichtungselement (1) nach einem der vorhergehenden Ansprüche, wobei der zweite Schaumabschnitt (4) derart ausgebildet ist, ein Schrumpfen des Dichtungselements (1) zu verringern, wenn dieses auf Zug belastet wird.

13. Dichtungselement (1) nach einem der vorhergehenden Ansprüche, wobei der erste Schaumabschnitt (2) und der zweite Schaumabschnitt (4) aus geschäumten Material ausgebildet sind.
